## Europäisches Patentamt
## European Patent Office
## Office européen des brevets

(19)

(11) Veröffentlichungsnummer: **0 425 927 B1**

(12) **EUROPÄISCHE PATENTSCHRIFT**

(45) Veröffentlichungstag der Patentschrift: **29.11.95**

(51) Int. Cl.⁶: **C03C 8/02**, C03C 8/04, C03C 8/06, C03C 8/08

(21) Anmeldenummer: **90120073.3**

(22) Anmeldetag: **19.10.90**

(54) **Emailfritten mit verbesserter Haftung für Stahlblech.**

(30) Priorität: **01.11.89 DE 3936284**

(43) Veröffentlichungstag der Anmeldung:
**08.05.91 Patentblatt 91/19**

(45) Bekanntmachung des Hinweises auf die
Patenterteilung:
**29.11.95 Patentblatt 95/48**

(84) Benannte Vertragsstaaten:
**DE ES FR GB IT NL**

(56) Entgegenhaltungen:
**EP-A- 0 018 559**
**US-A- 4 221 824**

**CHEMICAL ABSTRACTS, vol. 90, No. 8, 19
Februar 1979, Columbus, Ohio, USA, Sei-
te311; ref. no. 59948B**

**CHEMICAL ABSTRACTS, vol. 87, no. 22, 28
November 1977, Columbus, Ohio, USA, Seite
247, ref. No. 171914B**

**CHEMICAL ABSTRACTS, vol. 74, no. 12, 22
März 1971, Columbus, Ohio, USA, Seite208;
ref. no. 56938G**

(73) Patentinhaber: **BAYER AG**

**D-51368 Leverkusen (DE)**

(72) Erfinder: **Podestà, Wolfgang, Dr.
c/o Email Brügge N.V.,
Pathoeke Weg 116-118
B-8000 Brügge (BE)**

EP 0 425 927 B1

**Beschreibung**

Die vorliegende Erfindung betrifft Emailfritten für die Emaillierung von Stahlblech, insbesondere ungebeiztes, nicht vernickeltes Blech, mit herausragender Emailhaftung bis in den Bereich niedriger Einbrenntemperaturen.

Grund- und Direktemails haben die primäre Aufgabe, eine gute Haftung zwischen dem metallischen Werkstück und der glasartigen Emailschicht herzustellen. Darüber hinaus soll die Emaillierung über einen möglichst breiten Temperaturbereich brennbeständig sein, eine glatte, fehlerfreie Oberfläche aufweisen und auch nach wiederholtem Einbrand keine Haftungsminderung erleiden. Dies erreicht man durch Kombination netzwerkbildender Oxide wie $SiO_2$, $TiO_2$, $B_2O_3$, $P_2O_5$ mit intermediären Oxiden wie $ZrO_2$, $ZnO$, $Al_2O_3$ sowie netzwerkwandelnden Oxiden wie $Li_2O$, $Na_2O$, $K_2O$, $CaO$, $BaO$ und Fluor (letzteres in Form von Fluoriden).

Direktemails enthalten zumeist einen größeren Anteil an $TiO_2$ bzw. $ZrO_2$, um die Emaillierung beständig gegen sauren bzw. alkalischen Angriff zu machen.

Zur Erzielung einer guten Haftung zwischen Email und Stahl sind darüber hinaus bei allen Grund- und Direktemails Zusätze von Haftoxiden wie $CoO$, $NiO$, $CuO$ sowie gelegentlich auch Eisenoxid, Antimonoxid bzw. Arsenoxid erforderlich (Email und Emailliertechnik, A. Petzold, H. Pöschmann, Springer Verlag, 1987, Seiten 58 ff.).

Dies gilt insbesondere für die Emaillierung von ungebeizten, an der Oberfläche nur wenig aufgerauhten Blechen, bei denen die Verzahnung bzw. die Reaktion mit dem Email nur schwierig zustande kommt. Gerade diesem Verfahren kommt aber heute eine große Bedeutung zu, da es aus Gründen der Ökologie und der Wirtschaftlichkeit immer mehr in den Vordergrund rückt.

Um die Emailhaftung auch auf nur entfetteten, beim Pulverauftrag teilweise sogar völlig unvorbehandelten Blechen optimal zu entwickeln, werden in der Praxis zwei verschiedene Wege beschritten:

1. Entwicklung alkalireicher reaktiver Emailfritten, die bereits nach kurzer Einbrennzeit das Blech benetzen und die im Email enthaltenen Haftoxide optimal zur Wirkung bringen (W. Podesta, Mitt. VDEfa 37 (1989), 117).

2. Emails mit erhöhtem Gehalt an Haftoxiden, vornehmlich $CoO$ und $NiO$ (D. Ritchie, Mitt. VDEfa 24 - (1976), 35).

Beide Wege zeigen allerdings in der Praxis gravierende Nachteile: so ist das erstgenannte Verfahren nur für die chemisch weniger beständigen Grundemails geeignet, das zweite dagegen ist vor allem sehr kostenintensiv ($NiO$ und $CoO$ sind die teuersten Bestandteile von Grund- und Direktemails).

So hat man in der Vergangenheit immer wieder nach Wegen gesucht, Emails ohne Haftoxide mit akzeptabler Haftung zu emaillieren (vergl. A. Dietzel: Emaillierung, Springer-Verlag, S. 119 ff). Diese Verfahren sind jedoch aufgrund der geringen Toleranzen in der Verarbeitung (Einhaltung sehr spezieller Brennbedingungen etc.) heute ohne jede praktische Bedeutung.

Auch mit Eisenoxidzusätzen erschmolzene Emails lassen sich nur unter sehr drastischen Bedingungen so emaillieren, daß eine akzeptable Haftung resultiert. Zudem führen größere Zusätze an Eisenoxid zu einer deutlichen Herabsetzung der chemischen Beständigkeit der resultierenden Emaillierung.

Antimon- und Arsentrioxid erlauben ebenfalls eine gute Emailhaftung, der Einsatz ist aber auf Grund ökologischer Überlegungen bzw. strenger gesetzlicher Auflagen heute in großem Umfang nicht mehr zu verantworten.

Von den verbleibenden Haftoxiden $CoO$, $NiO$ bzw. $CuO$ werden vorzugsweise $CoO$ und $NiO$ verwendet und zwar sowohl einzeln als auch als Kombination. Die Wirkung dieser Haftoxide beruht in erster Linie auf einer Beschleunigung der Haftreaktion, vorzugsweise durch Erhöhung der galvanischen Korrosion des Stahls beim Emaileinbrand sowie der Bildung haftungsfördernder FeCo- bzw. FeNi-Mischkristallite an der Phasengrenze (vergl. E. Millon, Dissertation, Lyon, 1988). Zudem fördern $CoO$ und $NiO$ die Benetzung der Blechoberfläche mit Email.

$CuO$ ist - ebenso wie $NiO$ - als alleiniges Haftoxid nur in größeren Mengenanteilen (> 2,5 Gew.-%) hinreichend wirksam, wobei die Emailhaftung schlechter als bei CoO-haltigen Emails ist. Dies wird u.a. auf das höhere Redoxpotential von $NiO$ bzw. $CuO$ gegenüber metallischem Eisen bzw. Eisenoxid zurückgeführt, was wiederum zu einer vorzeitigen Reduzierung dieser "edlen" Haftoxide im Email führt und damit diese Haftoxide den an der Phasengrenze Stahl/Email ablaufenden Haftreaktionen entzieht (vergl. A. Dietzel, Emaillierung, S. 119 ff ). $CuO$ wurde daher bislang allenfalls als Zusatzkomponente zu $CoO$ und $NiO$ im Email verwendet, teils auch als färbender Emailbestandteil. Gut haftende Grund- und Direktemails, die $CuO$ als alleiniges Haftoxid enthalten, sind bislang nicht bekannt geworden.

Natürlich hat es auch nicht an Versuchen gefehlt, die synergistischen Effekte, die bei der Mischung von $CoO$ und $NiO$ sowie anderer o.a. haftwirksamer Oxide beobachtet werden, für die Praxis auszunutzen. Grund- und Direktemails beinhalten daher in der Regel mindestens 2, oft aber 3, 4 oder 5 haftwirksame Elementoxide, bevorzugt jedoch CoO und NiO.

Weiterhin ist bekannt, daß durch Mischung von harten (Füllgrund) bzw. weichen (Netzgrund) Emailfritten, z.T. unter Zusatz von schmelzwirksamen Stoffen bzw. Inertstoffen, die Emailhaftung positiv beeinflußt werden kann. Der primäre Zweck derartiger Mischungen besteht allerdings darin, Oberflächenspannung, Wärmeausdehnung, chemische Beständigkeit, Viskosität, Brennstabilität sowie Farbe - entsprechend dem Anforderungsprofil - gezielt beeinflussen zu können.

Aufgabe war es nun, Emailfritten zur Verfügung zu stellen, die auf gebeizten, aber auch auf ungebeizten, nicht vernickelten Stahlblechen sehr gut haften, über einen großen Temperaturbereich brennbeständig und im Falle der Direktemails zusätzlich gegen sauren und alkalischen Angriff beständig sind.

Durch Bereitstellung der erfindungsgemäßen Emailfritten konnte diese Aufgabe gelöst werden.

Überraschenderweise wurde gefunden, daß übliche Grund-und Direktemailfritten mit folgender Zusammensetzung

| | |
|---|---|
| $SiO_2$ | 30 - 60 Gew.-% |
| $ZrO_2$ | 0 - 15 Gew.-% |
| $TiO_2$ | 0 - 10 Gew.-% |
| $P_2O_5$ | 0 - 4 Gew.-% |
| $B_2O_3$ | 7 - 27 Gew.-% |
| $Al_2O_3$ | 0 - 11 Gew.-% |
| F | 0 - 8 Gew.-% |
| $Na_2O$ | 6 - 22 Gew.-% |
| $K_2O$ | 0 - 10 Gew.-% |
| $Li_2O$ | 0 - 6 Gew.-% |
| BaO | 0 - 20 Gew.-% |
| CaO | 0 - 18 Gew.-% |
| ZnO | 0 - 15 Gew.-% |

und gegebenenfalls Zusätzen von bis zu 10 Gew.-% an MgO, $Fe_2O_3$, MnO, $Cr_2O_3$ und/oder $MoO_3$ zu einer ausgezeichneten Emailhaftung auf emaillierfähigem, bevorzugt ungebeiztem Stahl führen, wenn diese Fritten zusätzlich 0,8 bis 5 Gew.-% an CoO und 1,2 bis 6 Gew.-% an CuO enthalten, wobei das CuO : CoO-Molverhältnis zwischen 1,5 und 3 liegt und die Summe von CuO und CoO mindestens 2,3 Gew.-% und maximal 10 Gew.-%, vorzugsweise 3 bis 5 Gew.-%, beträgt, und zusätzlich bis zu 0,5 Gew.-% an NiO als Haftoxid enthalten.

Der Zusatz an Nickeloxid führt in Einzelfällen zu einer deutlichen Haftungsverbesserung.

Es scheint besonders wichtig zu sein, daß das CuO : CoO-Molverhältnis mindestens 1,5 beträgt, da ein höherer CoO-Gehalt das im Email eingeschmolzene CuO vorzeitig reduzieren könnte. Dies gilt auch für Emails, die Nickeloxid enthalten (NiO und CoO sind unedler als CuO).

Überraschenderweise zeigte sich, daß sich die erfindungsgemäßen Emails besonders für die Applikation auf ungebeizten, nicht vernickelten Stahlsubstraten eignen und handelsüblichen Grund- und Direktemails hinsichtlich der Emailhaftung, aber auch hinsichtlich der Rohstoffkosten überlegen sind. Dies gilt insbesondere für die Emaillierung auf kohlenstoffarmen Stählen (< 0,006 % C).

Die erfindungsgemäßen Emails eignen sich für den Schlickerauftrag durch Fluten, Tauchen oder Spritzen, können aber auch durch elektrophoretischen Tauchauftrag oder pulverelektrostatischen Auftrag auf das zu emaillierende Blech aufgebracht werden. Bei letzterem Verfahren kann im Extremfall sogar die Entfettung bei der Blechvorbehandlung entfallen, wodurch dieses Verfahren besonders wirtschaftlich wird.

Die erfindungsgemäßen Emails können entweder im Einschichtverfahren oder - zusammen mit einem Deckemail - im Zweischicht-2-Brand- bzw. im Zweischicht-1-Brand-Verfahren (vergl. DE-A 3 117 706) aufgetragen und eingebrannt werden.

Die erfindungsgemäßen Emailfritten werden aus handelsüblichen Emailrohstoffen wie Borax ($Na_2B_4O_7$ • $5H_2O$), Quarzmehl, Natriumpolyphosphat, Feldspat, Zirkonsand, Flußspat, Alkali- und Erdalkalicarbonaten sowie den entsprechenden Schwermetalloxiden bei 1.100 - 1.250°C geschmolzen und über wassergekühlte Stahlwalzen abgeschreckt. Die so entstandenen Flakes werden sowohl als Emailpulver im elektrostatischen Feld als auch als wäßrige Suspension in Schlickerform durch Tauchen oder Spritzen auf Prüfbleche von 0,5 bis 3 mm Stärke aufgebracht und können in einem Boxofen oder in einem Temperaturgradientenofen in einem Temperaturbereich zwischen 780 und 880°C eingebrannt werden.

Die Schichtstärke der Einschichtemaillierungen betrug bei den Versuchen 0,15 bis 0,2 mm, bei den Zweischichtemaillierungen zwischen 0,25 und 0,5 mm. Die Prüfung der Emailhaftung erfolgte mit dem

3

Kugelfallgerät gemäß DEZ-Merkblatt F 6.2 unter Verformung des Stahlblechs und visueller Beurteilung des Haftungsbildes.

Der Gegenstand der vorliegenden Erfindung soll anhand der folgenden Beispiele 1-4 (Beispiel 5 ist ein Vergleichsbeispiel) noch näher erläutert werden.

Beispiele 1 bis 5

Aus handelsüblichen Emailrohstoffen wurden in Schamottetiegeln von 700 ml Volumen bei etwa 1.200 °C Emailfritten folgender Zusammensetzung erschmolzen (Werte in Gew.-%):

| Fritte Zusammensetzung | 1 | 2 | 3 | 4 | 5 |
|---|---|---|---|---|---|
| $SiO_2$ | 47,5 | 40,0 | 44,5 | 28,2 | 47,8 |
| $ZrO_2$ | - | - | 3,1 | - | - |
| $TiO_2$ | - | - | - | - | - |
| $P_2O_5$ | 1,7 | - | 0,3 | - | 1,7 |
| $B_2O_3$ | 14,0 | 17,7 | 15,9 | 11,5 | 14,0 |
| $Al_2O_3$ | 6,4 | 5,5 | 6,9 | 10,5 | 6,4 |
| F | 2,8 | 2,9 | 1,3 | 6,9 | 2,8 |
| $Na_2O$ | 14,6 | 14,4 | 13,0 | 13,7 | 14,6 |
| $K_2O$ | 3,0 | 2,1 | 3,7 | - | 3,0 |
| $Li_2O$ | - | - | - | 2,6 | - |
| BaO | 2,3 | 10,7 | - | 15,7 | 2,3 |
| CaO | 6,4 | 3,5 | 6,9 | 8,6 | 6,4 |
| MgO | - | - | 0,5 | 0,3 | - |
| MnO | - | 0,8 | 0,8 | - | - |
| $Fe_2O_3$ | - | - | 1,0 | - | - |
| CoO | 1,0 | 1,2 | 0,8 | 0,9 | 0,6 |
| NiO | - | 0,2 | - | 0,3 | 1,2 |
| CuO | 1,6 | 2,4 | 1,9 | 3,7 | 0,3 |
| CuO/CoO | 1,6 | 2,0 | 2,0 | 4,1 | 0,5 |
| CuO+CoO | 2,6 | 3,6 | 2,7 | 4,6 | 0,9 |

Die Schmelzdauer betrug je nach Email zwischen 25 und 45 Minuten. Nach dem Erschmelzen wurden die Emails über Stahlwalzen abgekühlt, das Glasband zu Flakes gebrochen, zusammen mit üblichen Zuschlagstoffen vermahlen und jeweils nach einem der üblichen unten aufgeführten Verfahren auf entfettetem Emaillierblech aufgetragen. Der Einbrand erfolgte entweder in einem Gradientenofen bei Temperaturen von 780 bis 880 °C oder in Boxofen bei 800 bis 850 °C.

Schlickerauftrag:

1.000 g Flakes der Fritte 1 wurden in einer mit 3.500 g Schwermahlkugeln gefüllten Kugelmühle nach folgendem Mühlenversatz zu einem Schlicker vermahlen:

| Fritte | 100 Gew.-% |
|---|---|
| Quarzmehl | 5 Gew.-% |
| Blauton | 1 Gew.-% |
| Weißton | 3,5 Gew.-% |
| Calziumsilikat (gefällt) | 0,1 Gew.-% |
| Natriumnitrit | 0,1 Gew.-% |
| Borsäure | 0,2 Gew.-% |
| Wasser | ca. 50 Gew.-% |
| Mahlfeinheit | 3 auf 3.600 Maschensieb |
| Dichte | 1,67 g/cm$^3$ |

Von diesem Schlicker wurde auf Blechstreifen von 6 x 45 cm (für Gradientenofen) bzw. 10 x 10 cm (für Boxofen) durch Spritzen oder Tauchen so viel aufgebracht, daß sich nach dem Einbrennen eine Schichtstärke von 0,15 mm ergab. Nach dem Trocknen wurden die Bleche entweder 10 Minuten im Gradientenofen oder 4 Minuten im Boxofen eingebrannt. Die Haftungsprüfung mit dem Fallgerät ergab gute Haftung über den Temperaturbereich von 800 bis 880° C (Gradientenofen) bzw. 820 bis 850° C (Boxofen).

Elektrophoretischer Tauchauftrag (ETE):

1.000 g Flakes der Fritte 2 wurden in einer mit 3.500 g Schwermahlkugeln gefüllten Kugelmühle nach folgendem Mühlenversatz zu einem Schlicker vermahlen:

| Fritte | 100 Gew.-% |
|---|---|
| Blauton | 2,5 Gew.-% |
| Bentonit | 0,8 Gew.-% |
| Relatin | 0,1 Gew.-% |
| NaCl | 0,01 Gew.-% |
| Wasser | ca. 50 Gew.-% |
| Mahlfeinheit | 3 auf 16.900 Maschensieb |
| Dichte | 1,64 g/cm$^3$ |

Der Schlicker wird durch Zugabe von Wasser bzw. Natriumaluminat-Lösung auf eine Viskosität von ca. 100 mPa•sec bzw. eine Leitfähigkeit von 3000-4000 µS eingestellt und bei einer Stromstärke/Stromspannung von 5-10 Ampere/50 Volt elektrophoretisch an entfetteten 7 x 11 cm Blechen einer Dicke von 1 mm abgeschieden, so daß nach dem Einbrennen eine Schichtstärke von 0,18 mm resultiert. Nach dem Trocknen wurden die Probebleche 3 Minuten bei 800 bzw. 820°C im Boxofen eingebrannt. Die Haftungsprüfung mit dem Fallgerät ergab gute Haftung.

Pulverauftrag:

In einer Porzellankugelmühle wurden jeweils 100 g Emailflakes der Fritte 3 bzw. 4 und 0,4 g Methyl-Wasserstoff-Siloxan so lange vermahlen, bis der Rückstand des Pulvers auf dem 16.900 Maschensieb (Maschenweite 40 µm) weniger als 20 % betrug. Das Pulver, das einen Oberflächenwiderstand von mehr als 10$^{12}$Ω aufwies, wurde mit einer Elektrostatikpistole unter Anlegen von 70 kV Spannung auf 6 x 45 cm Stahlbleche von 1 mm Stärke in gleichmäßiger Schicht aufgesprüht. Nach dem Aufbringen von 14 g Puler (entsprechend 5,2 g/dm$^2$) wurden die Stahlbleche 10 Minuten im Gradientenofen eingebrannt. Es wurden sowohl entfettete als auch nicht entfettete Bleche verwendet, Die Haftungsprüfung mit dem Fallgerät ergab jeweils gute Haftung für beide Fritten im Temperaturbereich von 800 bis 880°C und besonders gute Haftung auf Blechen aus entkohltem Stahl.

Fritte 5, die nicht die erfindungsgemäßen Parameter erfüllt, zeigt eine deutlich schlechtere Emailhaftung als die erfindungsgemäßen Fritten 1 - 4.

**Patentansprüche**

**1.** Grund- und Direktemailfritten für die Emaillierung von emaillierfähigem, vorzugsweise ungebeizten Stahl mit einer Zusammensetzung aus

5

| SiO$_2$ | 30 - 60 Gew.-% |
|---|---|
| ZrO$_2$ | 0 - 15 Gew.-% |
| TiO$_2$ | 0 - 10 Gew.-% |
| P$_2$O$_5$ | 0 - 4 Gew.-% |
| B$_2$O$_3$ | 7 - 27 Gew.-% |
| Al$_2$O$_3$ | 0 - 11 Gew.-% |
| F | 0 - 8 Gew.-% |
| Na$_2$O | 6 - 22 Gew.-% |
| K$_2$O | 0 - 10 Gew.-% |
| Li$_2$O | 0 - 6 Gew.-% |
| BaO | 0 - 20 Gew.-% |
| CaO | 0 - 18 Gew.-% |
| ZnO | 0 - 15 Gew.-% |

und gegebenenfalls Zusätzen von bis zu 10 Gew.-% an MgO, Fe$_2$O$_3$, MnO, Cr$_2$O$_3$ und/oder MoO$_3$, dadurch gekennzeichnet, daß die Fritten zusätzlich 0,8 bis 5 Gew.-% an CoO und 1,2 bis 6 Gew.-% an CuO als Haftoxide enthalten, wobei das CuO : CoO-Molverhältnis im Email zwischen 1,5 und 3 und die Summe von CuO und CoO mindestens 2,3 Gew.-% und maximal 10 Gew.-% beträgt, und zusätzlich bis zu 0,5 Gew.-% an NiO als Haftoxid enthalten.

## Claims

**1.** Priming and direct enamel frits of the following composition for enamelling steel capable of being enamelled, preferably unpickled steel

| SiO$_2$ | 30 - 60 wt.% |
|---|---|
| ZrO$_2$ | 0 - 15 wt.% |
| TiO$_2$ | 0 - 10 wt.% |
| P$_2$O$_5$ | 0 - 4 wt.% |
| B$_2$O$_3$ | 7 - 27 wt.% |
| Al$_2$O$_3$ | 0 - 11 wt.% |
| F | 0 - 8 wt.% |
| Na$_2$O | 6 - 22 wt.% |
| K$_2$O | 0 - 10 wt.% |
| Li$_2$O | 0 - 6 wt.% |
| BaO | 0 - 20 wt.% |
| CaO | 0 - 18 wt.% |
| ZnO | 0 - 15 wt.% |

and optionally additions of up to 10 wt.% of MgO, Fe$_2$O$_3$, MnO, Cr$_2$O$_3$ and/or MoO$_3$, characterised in that the frits additionally contain 0.8 to 5 wt.% of CoO and 1.2 to 6 wt.% of CuO as bonding oxides, wherein the molar ratio of CuO:CoO in the enamel is between 1.5 and 3 and the sum of CuO and CoO is at least 2.3 wt.% and at most 10 wt.%, and additionally contain up to 0.5 wt.% of NiO as bonding oxide.

## Revendications

**1.** Frittes d'émaux de fond et d'émaux directs pour l'émaillage de l'acier émaillable, de préférence non décapé, à la composition suivante :

| | |
|---|---|
| $SiO_2$ | 30 à 60 % en poids |
| $ZrO_2$ | 0 à 15 % en poids |
| $TiO_2$ | 0 à 10 % en poids |
| $P_2O_5$ | 0 à 4 % en poids |
| $B_2O_3$ | 7 à 27 % en poids |
| $Al_2O_3$ | 0 à 11 % en poids |
| F | 0 à 8 % en poids |
| $Na_2O$ | 6 à 22 % en poids |
| $K_2O$ | 0 à 10 % en poids |
| $Li_2O$ | 0 à 6 % en poids |
| BaO | 0 à 20 % en poids |
| CaO | 0 à 18 % en poids |
| ZnO | 0 à 15 % en poids |

et le cas échéant des adjonctions de $MgO$, $Fe_2O_3$, $MnO$, $Cr_2O_3$ et/ou $MoO_3$ en proportion allant jusqu'à 10 % en poids, caractérisées en ce qu'elles contiennent en outre de 0,8 à 5 % en poids de CoO et de 1,2 à 6 % en poids de CuO en tant qu'oxydes d'adhérence, le rapport molaire CuO/CoO dans l'émail allant de 1,5 à 3 et la somme de CuO et de CoO représentant au moins 2,3 % en poids et au maximum 10 % en poids, et en outre NiO, en tant qu'oxyde d'adhérence, en proportion allant jusqu'à 0,5 % en poids.